# EUROPÄISCHE PATENTANMELDUNG

(11) **EP 3 007 371 A1**
(43) Veröffentlichungstag der Anmeldung: **13.04.2016**
(21) Anmeldenummer: 14188492.4
(22) Anmeldetag: 10.10.2014
(51) Int. Cl.: H04B 10/272, H04B 10/50, H04B 10/60

(54) **Transceiver und Zentralknoten in einem Ethernet-Netzwerk**

(71) Anmelder: DIEMOUNT GmbH, 38855 Wernigerode (DE)
(72) Erfinder: Kragl, Hans, 38855 Wernigerode (DE)
(74) Vertreter: Caspary, Karsten

(57) **Zusammenfassung**

Es wird ein Transceiver (1) zur Verbindung eines Zentralknotens (20, 21) in einem Ethernet-Netzwerk mit einem Netzknoten über eine optische Datenübertragungsstrecke (10, 12) bereitgestellt, mit einem Sendemodul (3) zum Senden von optischen Signalen an einen Netzknoten, wobei das Sendemodul (3) eine optische Sendediode (5) und eine Treiberschaltung (7) aufweist, einem Empfangsmodul (9) zum Empfangen von optischen Signalen von einem Netzknoten, wobei das Empfangsmodul (9) eine optische Empfangsdiode (11), einen Vorverstärker (13) und einen Nachverstärker (15) aufweist, wobei das Empfangsmodul (9) ein Auswertesignal ausgibt, das dazu verwendet wird, das Sendemodul (3) ein- oder auszuschalten.

## Beschreibung

### Gegenstand der Erfindung

Die vorliegende Erfindung betrifft einen Transceiver und einen Zentralknoten in einem Ethernet-Netzwerk, das optische Datenübertragungsstrecken zwischen Netzknoten aufweist.

### Gebiet der Erfindung

Netzwerke für die Datenübertragung vom entsprechenden Internetzugangsknoten über Zentralknoten zu einzelnen Geräten in Gebäuden, wobei die Geräte per Kabel mit einem Zentralknoten verbunden sind, sind heutzutage überall verfügbar und bilden eine wesentliche Grundlage für die Internet-Infrastruktur. Den Quasi-Standard für die Datenübertragung von einem Zentralknoten an Endgeräte und auch in weiteren WAN Netzebenen (in Richtung Internet) bildet dabei das Ethernet-Protokoll.

Derartige Netzwerke bzw. Heimnetzwerke sind als WLAN-Netze, also Funknetze, oder plc-Netze (Power Line Communication) als Shared Medium konfiguriert und/oder als kabel- oder leitungsgebundene Netzwerke so ausgebildet, dass jeder Teilnehmer bzw. jedes Endgerät seine eigene Leitung zum Netzwerkknoten hat. Neben einer elektrischen Verkabelung über Kupferkabel werden in letzter Zeit zunehmend optische Medien als Datenübertragungsmedium eingesetzt, z. B. Lichtwellenleiter wie Glasfaser oder optische Polymerfasern (Polymer Optical Fiber; POF). Optische Lichtwellenleiter sind im Vergleich zu Kupferkabeln mit deutlich niedrigerem Aufwand zu verlegen und weisen dennoch im Vergleich zu Funknetzen oder Netzen über Energieleitungen (Power Line Communication; plc) die hohe Bandbreite leitungsgebundener Medien auf. Die POF zeichnet sich dabei durch ihre einfache Installierbarkeit aus, denn anstatt wie bei Glasfaser- oder Kupferdatenkabeln muss die POF nicht aufwendig konfektioniert werden, sondern kann einfach mit einer Spezialklinge abgeschnitten und in das zugehörige Endgerät eingesteckt werden und ist damit betriebsbereit.

Da die Datenverarbeitung der Signale in den Endgeräten bzw. Netzknoten nach "elektrischen" Prinzipien erfolgt, ist zur Schnittstellenwandlung der optischen Signale auf elektrische Signale ein Umwandlungsbauteil erforderlich. In jedem Netzwerkabschluss sind deshalb permanent Bauelemente aktiv, um die Signalumwandlung durchzuführen.

Als Konverterbauelemente eingesetzt werden unter anderem sogenannte SFP (small form-factor pluggable) Transceiver, die in SFP (small form-factor pluggable) Steckplätze von Zentralknoten bzw. Switches oder Medienkonvertern gesteckt werden können. Transceiver der SFP Spezifikation sind als Verbindungsstecker zur Signalwandlung zwischen optischen und elektrischen Medien für extrem schnelles Ethernet konstruiert. SFP Transceiver sind einfach und schnell austauschbar ("hot-swap"). Netzwerkgeräte können damit leicht auf andere Medien umgestellt werden und sind im Falle eines Defektes schnell repariert.

Abhängig von der verwendeten Kodierungstechnik liegt der Stromverbrauch bei derartigen Transceivern einschließlich der nachgeschalteten Elektronik zur Medienkonversion bei 2 bis 4 W pro Netzwerkabschluss und ca. 10 W bei einem Zentralknoten. Für ein typisches Heimnetzwerk mit vier Verbindungen von einem Zentralknoten zu Endgeräten ergibt sich damit ein Energieverbrauch von ca. 22 W, der bei einem aktuellen Strompreis von 0,25 EUR/kWh zu jährlichen Stromkosten von etwa 50,- EUR führt.

Durch den Dauerbetrieb der optischen Sendeelemente in den Transceivern, insbesondere der Laserdioden, reduziert sich darüber hinaus der Nutzungszeitraum dieser Bauelemente, da derartige Sendedioden lediglich eine beschränkte Lebensdauer von einigen Jahren aufweisen.

Ein weiterer Nachteil von Glasfaserkabeln oder POF ist, dass Systemkonstruktionen, die den Ausgang des Lichtwellenleiters am Netzabschluss nicht mit einem Empfänger abdecken, insbesondere bei Nacht den Wohnraum mit dem Licht beleuchten, welches aus dem gegenüberliegenden Netzknoten über den Lichtwellenleiter in den Raum abgestrahlt wird. Bei den auftretenden optischen Leistungen von 0,1 mW bis 1 mW ist dies insbesondere dann nicht akzeptabel, wenn in dem Raum Menschen schlafen.

Die US 2012/0017105 A1 betrifft energieeffiziente Ethernet-Netzwerkknoten zur Übertragung von Daten über Kupferleitungen oder faseroptische Leitungen zwischen zwei Netzwerkknoten. Ein jeweiliger Netzwerkknoten umfasst eine Datenübertragungseinheit und eine Kontrolleinheit. Eine Energieeinsparung wird dadurch erreicht, dass die Kontrolleinheit in einen Leerlaufmodus eintritt, nachdem eine vorbestimmte Zeit lang keine Daten übertragen wurden. Im Leerlaufmodus wird eine elektrische oder optische Übertragungskomponente der Datenübertragungseinheit für eine vorab zwischen verbundenen Netzwerkknoten ausgehandelte Ruhezeit abgeschaltet. Nach Ablauf der Ruhezeit, wird die Komponente kurzzeitig in Betrieb genommen, um ein Leerlauf-Statussignal an den verbundenen Netzknoten zu senden. Dadurch kann bei geringerem Energieverbrauch der "link-active" Status bestätigt werden.

Der in der US 2012/0017105 A1 beschriebene Ansatz ist komplex und erfordert ein periodisches Aus- und Einschalten der entsprechenden Sende- und Empfängereinheiten bzw. Transceiver. Dies führt im Allgemeinen jedoch zu einer Mehrbelastung der Bauteile und dadurch letztendlich nicht zu einer Energieeinsparung.

Ein Lösungsansatz zur energiesparenden Stromversorgung von Netzwerkelementen in einem Ethernet-Netzwerk ist unter dem Begriff PPoE (Passive Power over Ethernet) bekannt. Dabei werden beispielsweise Medienkonverter nicht über ein eigenes Netzteil mit Strom aus dem Stromnetz versorgt, sondern beispielsweise über einen freien USB Port des anzubindenden Endgerätes, das selbst über eine Stromnetzanbindung verfügt. Angewendet wird dieses Konzept beispielsweise bei WLAN-Zugangspunkten oder Webcams, die nicht über ein eigenes Netzteil mit dem Stromnetz versorgbar sind. Damit kann die Kombination aus Medienkonverter und Endgerät beispielsweise gleichzeitig ausgeschaltet werden.

### Zusammenfassung der Erfindung

Es ist daher die Aufgabe der vorliegenden Erfindung, einen Transceiver zur Verbindung eines Zentralknotens in einem Ethernet-Netzwerk mit einem Netzknoten über eine optische Datenübertragungsstrecke und einen Zentralknoten bereitzustellen, der die genannten Nachteile zumindest teilweise überwindet, Stromkosten einspart, einfach aufgebaut ist, keine hohen Investitionskosten verursacht, die Lebensdauer der vorhandenen Bauelemente erhöht und die Handhabung eines optischen Netzwerks verbessert.

Diese Aufgabe wird durch den Gegenstand der unabhängigen Ansprüche 1 und 8 gelöst. Vorteilhafte Ausführungsformen sind in den Unteransprüchen beschrieben. Erfindungsgemäß ist ein Transceiver zur Verbindung eines Zentralknotens in einem Ethernet-Netzwerk mit einem Netzknoten über eine optische Datenübertragungsstrecke, mit einem Sendemodul zum Senden von optischen Signalen an einen Netzknoten, wobei das Sendemodul eine optische Sendediode und eine Treiberschaltung aufweist, und einem Empfangsmodul zum Empfangen von optischen Signalen von einem Netzknoten, wobei das Empfangsmodul eine optische Empfangsdiode, einen Vorverstärker und einen Nachverstärker aufweist. Der Transceiver ist dadurch gekennzeichnet, dass das Empfangsmodul ein Auswertesignal ausgibt, das dazu verwendet wird, das Sendemodul ein- oder auszuschalten. Durch das Auswertesignal ist es möglich, das Sendemodul auszuschalten, sobald eine bestimmte Signalkonstellation am Empfangsmodul anliegt, die für einen bestimmten Funktionszustand der Empfangssignalstrecke charakteristisch ist. Dadurch kann man das Sendemodul ohne manuelles Zutun ausschalten, also automatisch. Gleiches gilt für das Einschalten, also das erneute Aktivieren des Sendemoduls des Transceivers. Damit sind erhebliche Energieeinsparungen erzielbar.

Besonders vorteilhaft ist es, wenn das Auswertesignal ein Loss-of-Signal (LOS) Digitalsignal oder ein Signal-Detect (SD) Digitalsignal ist. Diese Signale können auf einfache Weise aus den Bauelementen des Transceivers abgenommen und so ausgewertet werden, dass ein einfaches Aus- bzw. Einschalten des Sendemoduls möglich ist.

Bevorzugt weist der Transceiver ein Schaltelement auf, das vom Auswertesignal angesteuert wird, im Sendemodul angeordnet und vorzugsweise als MOSFET ausgebildet ist. Ein MOSFET ist ein ausgereiftes und zu geringen Kosten verfügbares, Platz sparendes Bauelement, das ohne Weiteres zusätzlich auf der Platine des Transceivers aufgebracht werden kann. Es ist anzumerken, dass alternativ auch andere Halbleiterbauelemente, die eine Schaltelementfunktion aufweisen, anstelle eines MOSFET eingesetzt werden können. Die Anordnung des Schaltelements im Sendemodul des Transceivers ist eine bevorzugte Ausgestaltung der erfinderischen Prinzips zur Energieeinsparung. Eine alternative Ausgestaltung ist weiter unten für einen Zentralknoten beschrieben.

Mit weiterem Vorteil wird das Auswertesignal innerhalb des Transceivers vom Empfangsmodul unmittelbar zum Schaltelement im Sendemodul übertragen. Die automatische Abschaltung oder auch Einschaltung erfolgt damit ohne Verzögerung direkt im Transceiver, d. h. ohne Umweg über eine externe Steuereinheit oder dergleichen. Es müssen dadurch keine externen Bauelemente modifiziert werden, z. B. die eines SFP Switches, in den der erfindungsgemäße Transceiver eingesteckt ist. Damit können auch vorhandene (SFP) Transceiver des Standes der Technik in einem herkömmlichen Switch durch die erfindungsgemäßen Transceiver ersetzt werden, um eine Energieeinsparung zu erzielen.

Vorteilhafterweise weist das Empfangsmodul zwischen Vorverstärker und Nachverstärker einen Spitzenwertgleichrichter auf, dessen Ausgangssignal als Auswertesignal ausgebildet ist, um unmittelbar das Sendemodul und den Nachverstärker des Empfangsmoduls auszuschalten. Mit einem derartigen Aufbau der elektronischen Bauelemente lässt sich der Stromverbrauch im Leerlauf des Transceivers noch weiter reduzieren, denn damit kann auch der Nachverstärker automatisch ausgeschaltet werden. Der Spitzenwertgleichrichter als zusätzliches Bauelement benötigt zwar auch dauerhaft eine Stromversorgung - der Stromverbrauch des Spitzenwertgleichrichters ist jedoch wesentlich geringer als der des Nachverstärkers.

Mit weiterem Vorteil ist der Nachverstärker mit einem Schaltelement im Empfangsmodul ein- und ausschaltbar, das mit dem Auswertesignal angesteuertwird. Insbesondere eignet sich als Schaltelement im Empfangsmodul ein MOSFET. Wie oben bereits erwähnt ergibt sich dadurch eine besonders einfache und günstig aufzubauende Schaltung.

Weiterhin erfindungsgemäß ist ein Zentralknoten für ein Ethernet-Netzwerk zur Datenübertragung zwischen dem Zentralknoten mit mindestens einem Netzknoten über eine optische Datenübertragungsstrecke, wobei der Zentralknoten pro Netzknoten einen Downlink Port umfasst, wobei jeder Downlink Port einen Transceiver aufweist, der den Zentralknoten über die optische Datenübertragungsstrecke mit dem zugehörigen Netzknoten verbindet und ein Empfangsmodul sowie ein Sendemodul umfasst, wobei jeder Transceiver geeignet ist, den Betriebszustand des zugehörigen Netzknotens zu detektieren und als Auswertesignal an den Zentralknoten zu übermitteln, so dass bei ausgeschaltetem Zustand des zugehörigen Netzknotens der Zentralknoten das Sendemodul des Transceivers automatisch abschaltet, und bei eingeschaltetem Zustand des zugehörigen Netzknotens der Zentralknoten das Sendemodul des Transceivers automatisch eingeschaltet.

Das Prinzip der vorliegenden Erfindung wird in dieser Ausgestaltung nicht unmittelbar im Transceiver, sondern im Zentralknoten umgesetzt. Damit wird es möglich, herkömmliche (SFP) Transceiver in einem erfindungsgemäßen Zentralknoten einzusetzen und damit die Energieeinsparung zu erzielen. Ein solcher Zentralknoten zur Verwendung in einem Ethernet-Netzwerk spart erheblich an Strom, was insbesondere in einem Heimnetzwerk zu einer signifikanten Kosteneinsparung führen kann: beispielsweise spart man bei einem Heimnetzwerk mit einem Switch mit den Merkmalen des erfindungsgemäßen Zentralknotens, an den vier Netzwerkgeräte bzw. Knoten z. B. über SFP Ports mit SFP Transceivern angeschlossen sind, pro Jahr knapp 50 EUR an Energiekosten, wenn alle Netzwerkknoten inaktiv sind. Derartige "Green IT" Umsetzungen spielen aufgrund der zunehmenden Stromkosten für Endverbraucher eine immer größere Rolle und werden auch für Nachrüstungen bzw. Modifizierungen von existierenden Netzwerken und Endgeräten immer interessanter.

Vorteilhafterweise ist der Betriebszustand eines Netzknotens im Empfangsmodul des zugehörigen Transceivers durch Auswertung des Loss-of-Signal (LOS) Digitalsignals oder alternativ durch Auswertung des Signal-Detect (SD) Digitalsignals als Auswertesignal bestimmt. Beide Digitalsignale (LOS und SD) sind innerhalb des Empfangsmoduls des Transceivers verfügbar.

Vorzugsweise weist der Zentralknoten pro Downlink Port ein Schaltelement auf, dem das Auswertesignal des zugehörigen Transceivers zugeführt wird, um das Sendemodul des zugehörigen Transceivers aus- bzw. einzuschalten. Dadurch ergibt sich die automatische Abschaltung bzw. Einschaltung des Sendemoduls je nach Betriebszustand des mit dem Downlink Port verbundenen Netzknotens.

Weiterhin vorteilhaft ist, wenn der Zentralknoten ein Verarbeitungsmodul aufweist, das das Auswertesignal jedes Transceivers empfängt und entsprechend jedem Schaltelement ein Schaltsignal zur automatischen Aus- und Einschaltung übermittelt. Damit kann die Auswerte- und Abschaltfunktionalität im Zentralknoten von einem Verarbeitungsmodul wie einer Steuereinheit oder einem Mikroprozessor ausgewertet und damit automatisch verarbeitet werden. Es ist damit auch möglich, das Sendemodul nicht direkt schon im Transceiver, wie oben bei der ersten Ausgestaltung der Erfindung beschrieben, sondern gesteuert vom Zentralknoten aus- bzw. einzuschalten. Im ersten Fall ist der Vorteil, dass man z.B. einen herkömmlichen Switch mit erfindungsgemäßen Transceivern ausstatten kann, um die Stromeinsparung zu erzielen, wohingegen man im letzteren Fall herkömmliche Transceiver in einem als erfindungsgemäßen Zentralknoten ausgebildeten Switch verwenden kann, um von der Energieeinsparung zu profitieren.

Im Fall des erfindungsgemäßen Zentralknotens (zweiter Fall) ergeben sich auch flexiblere Verarbeitungsmöglichkeiten. Beispielsweise ist es damit möglich, das Auswertesignal eines bestimmten Transceivers als Steuerungsparameter für andere Geräte bzw. Ereignisse zu nutzen.

Besonders bevorzugt weist der Zentralknoten einen Uplink Port auf, der über eine optische Datenübertragungsstrecke mit einem Netzknoten einer höheren Ebene verbindbar ist, wobei der Uplink Port einen Transceiver aufweist, der nicht über die oben beschriebenen Funktionalität des automatisch ausschaltbaren Sendemoduls verfügt, also einen herkömmlichen Transceiver mit Empfangs- und Sendemodul wie im Zusammenhang mit der zweiten Ausgestaltung der Erfindung beschrieben. Durch die besondere Ausgestaltung des Zentralknotens, z.B. in einem Verarbeitungsmodul, wird der Transceiver des Uplink Ports automatisch abgeschaltet, sobald die Sendemodule der Transceiver aller Downlink Ports des Zentralknotens im ausgeschalteten Betriebszustand sind. In gleicher Weise wird der Transceiver des Uplink Ports durch den Zentralknoten automatisch eingeschaltet, sobald mindestens ein Sendemodul der Transceiver aller Downlink Ports des Zentralknotens im eingeschalteten Betriebszustand ist. Damit lässt sich auch bei kaskadenartige Anordnungen von Zentralknoten in einem Netzwerk der Stromverbrauch erheblich reduzieren, denn die automatische Abschaltung von Sendemodulen bzw. Bauelementen erfolgt nicht nur pro Transceiver in derselben hierarchischen Ebene, sondern kann sich in höhere Ebenen fortpflanzen, z. B. in Zentralknoten, die als Hausverteiler oder dergleichen ausgebildet sind.

Es ist anzumerken, dass der erfindungsgemäße Transceiver auch in einem Downlink Port eines erfindungsgemäßen Zentralknoten zusammen eingesetzt werden kann. Die Funktionalität des automatischen Ein- bzw. Ausschaltens und damit der Effekt der Energieeinsparung ändert sich durch diese Kopplung nicht.

### Kurze Beschreibung der Figuren

Die Erfindung wird nachfolgend anhand von Ausführungsbeispielen unter Bezugnahme auf die beigefügten Figuren erläutert, in denen:
- Fig. 1: ein schematisches Schaltbild einer ersten Ausführungsform des erfindungsgemäßen Transceivers zeigt;
- Fig. 2: ein schematisches Schaltbild einer zweiten Ausführungsform des erfindungsgemäßen Transceivers zeigt;
- Fig. 3: ein schematisches Schaltbild einer dritten Ausführungsform des erfindungsgemäßen Transceivers zeigt;
- Fig. 4: schematisch die Verbindung von Netzknoten zeigt, die einen erfindungsgemäßen Transceiver verwenden; und
- Fig. 5: eine schematische Darstellung eines erweiterten Heimnetzwerks zeigt, das erfindungsgemäße Zentralknoten aufweist.

### Ausführliche Beschreibung bevorzugter Ausführungsformen

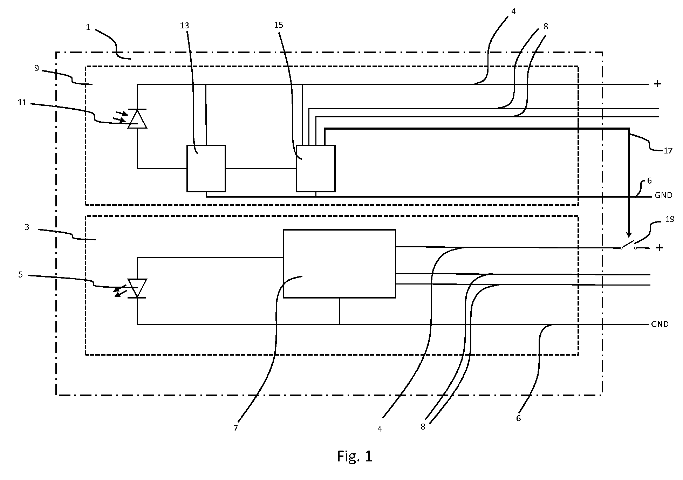

Fig. 1 zeigt eine schematische Darstellung einer ersten Ausführungsform des erfindungsgemäßen Transceivers 1, der in bevorzugter Weise als SFP (small form-factor pluggable) Transceiver ausgebildet ist. Der erfindungsgemäße Transceiver 1 weist ein Sendemodul 3 und ein Empfangsmodul 9 auf. Auf der in Fig. 1 dargestellten linken Seite ist der erfindungsgemäße Transceiver 1 in seinem Betriebszustand mit einer optischen Übertragungsstrecke verbunden, die in Fig. 1 nicht dargestellt ist und die Verbindung zu einem weiteren Netzknoten bzw. Client in einem Ethernet-Netzwerk darstellt. Das Sendemodul 3 weist eine optische Sendediode 5 auf, die üblicherweise als LED oder Laserdiode ausgebildet ist. Es ist auch möglich, dass andere als die genannten optischen Sendedioden zum Einsatz kommen. Angesteuert wird die optische Sendediode 5 von einer Treiberschaltung 7, die die elektrischen Eingangssignale in geeigneter Weise in Steuersignale für die optische Sendediode umwandelt. Dem Fachmann auf dem Gebiet von optischen Halbleiterschaltungen ist bekannt, welche Bestandteile eine derartige Treiberschaltung aufweisen kann und wie die optische Sendediode anzusteuern ist. Aus diesem Grund wird an dieser Stelle auf eine ausführliche Beschreibung der Treiberschaltung verzichtet.

Das Empfangsmodul 9 weist eine optische Empfangsdiode 11, einen Vorverstärker 13 sowie einen Nachverstärker 15 auf. Bevorzugt ist die optische Empfangsdiode 11 als PIN-Diode ausgebildet, es können jedoch auch andere optische Empfangsdioden verwendet werden, die ähnliche Eigenschaften aufweisen. Aus den oben genannten Gründen wird an dieser Stelle auch auf eine ausführliche Beschreibung des Vorverstärkers 13 und des Nachverstärkers 15 bzw. deren Bestandteile und Funktionsweise verzichtet, da diese dem einschlägigen Fachmann bekannt sind.

Sowohl das Sendemodul 3 als auch das Empfangsmodul 9 werden über entsprechende Stromleitungen 4 und 6 mit einer Versorgungsspannung versorgt, die bei derartigen Bauelementen und Schaltkreisen üblicherweise eine 3.3 V Gleichspannung ist. Die Versorgungsleitung 4 versorgt ebenfalls den Vorverstärker 13 sowie den Nachverstärker 15 mit der Gleichspannung und ist auf der Eingangsseite mit einem +-Zeichen gekennzeichnet. Die Versorgungsleitung 6 ist auf ihrer Eingangsseite mit dem Symbol GND gekennzeichnet, das üblicherweise für "Ground", also das Massepotential steht.

In der hier dargestellten Ausführungsform weisen das Empfangsmodul 9 sowie das Sendemodul 3 jeweils zwei Signalleitungen 8 auf, die ein differentielles Signal als Eingangssignal bzw. Ausgangssignal liefern. Die Signalleitungen 8 sind demnach die Hauptleitungen, die das zu übertragende Datensignal übertragen. Alternativ zu dem hier dargestellten differentiellen Signal, das über zwei Signalleitungen 8 übertragen wird, ist es auch möglich, lediglich eine Signalleitung vorzusehen, die jeweils das Eingangs- bzw. Ausgangssignal für Sende- bzw. Empfangsmodul überträgt.

Kennzeichnend für die vorliegende Erfindung ist das Auswertesignal, das in der hier dargestellten Ausführungsform auf der Auswertesignalleitung 17 anliegt und beispielsweise als LOS (Loss-of-Signal) oder invertiert als SD (Signal Detect) Digitalsignal vom Nachverstärker 15 ausgegeben bzw. davon abgenommen wird. Dieses Auswertesignal wird gemäß der vorliegenden Erfindung dazu verwendet, das Sendemodul 3 aus- bzw. anzuschalten je nach Betriebszustand des über die optische Datenübertragungsstrecke angeschlossenen Netzelements.

Wenn also über die optische Datenübertragungsstrecke an der optischen Empfangsdiode 11 kein optisches Signal mehr ankommt, weil beispielsweise das angeschlossene sendende Netzelement ausgeschaltet ist, dann gibt auch der Nachverstärker 15 über die Auswertesignalleitung 17 das Digitalsignal LOS aus. Dieses wird hier dazu verwendet, ein Schaltelement 19 derart zu schalten, dass die Versorgungsspannung für das Sendemodul 3 unterbrochen wird, d. h. am Sendemodul 3 liegt keine Versorgungsspannung mehr an, weshalb auch die an das Sendemodul 3 angeschlossene optische Datenübertragungsstrecke kein optisches Signal mehr liefert. Sämtliche elektronischen Bauelemente im Sendemodul 3 werden in diesem Betriebszustand nicht mehr mit Strom versorgt. Es fällt daher keine Verlustleistung durch das Abschalten des Sendemoduls mehr an.

In der hier dargestellten Ausführungsform wird das Auswertesignal über die Auswertesignalleitung 17 nach außen geführt, d. h. aus dem Empfangsmodul 9 und dem Transceiver 1 heraus. Das Schaltelement 19 befindet sich in der hier dargestellten ersten Ausführungsform außerhalb des Sendemoduls 3 bzw. des Transceivers 1. Dies hat den Vorteil, dass die Funktionalität zur Abschaltung des Sendemoduls nicht notwendigerweise nur im Transceiver 1 verarbeitet wird, sondern zusätzlich auch in dem übergeordneten Bauelement, z. B. einem Zentralknoten bzw. Switch ausgewertet und verarbeitet werden kann.

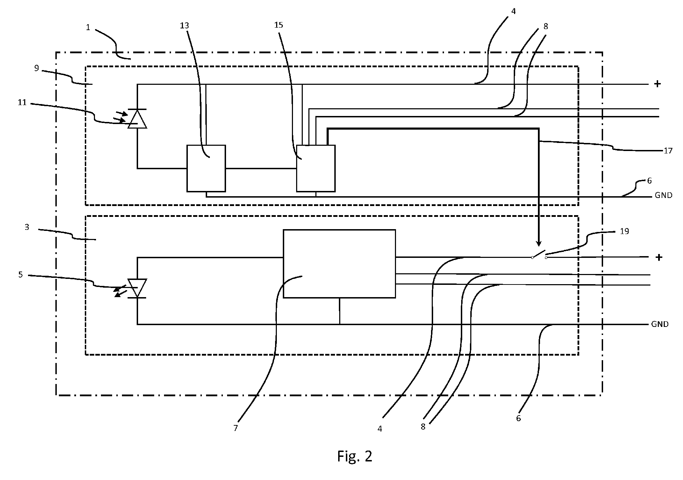

Fig. 2 zeigt eine schematische Darstellung einer weiteren Ausführungsform des erfindungsgemäßen Transceivers. Große Teile des Transceivers 1 der zweiten Ausführungsform sind identisch mit denen der ersten Ausführungsform, die unter Bezugnahme auf Fig. 1 beschrieben wurde. Deswegen wird an dieser Stelle auf eine Wiederholung der Beschreibung verzichtet und lediglich auf die Unterschiede eingegangen. Der Hauptunterschied zwischen der zweiten und der ersten Ausführungsform liegt darin, dass bei der zweiten Ausführungsform die Auswertesignalleitung 17 innerhalb des Transceivers 1 aus dem Empfangsmodul 9 in das Sendemodul 3 hineingeführt ist und dort mit einem Schaltelement 19 verbunden ist, das in der Spannungsversorgungsleitung 4 und damit innerhalb des Transceivers 1 angeordnet ist. Damit ist das Auswertesignal direkt innerhalb des Transceivers 1 zum Sendemodul 3 geführt, und die gesamte Funktionalität der automatischen Ab- und Einschaltung befindet sich im Transceiver 1. In der hier dargestellten Ausführungsform der Fig. 2 ist das Schaltelement 19 ein MOSFET, der vom Auswertesignal über die Auswertesignalleitung 17 direkt angesteuert wird. Damit wird bei Vorliegen eines LOS = 1, oder SD = 0 Digitalsignals als Auswertesignal auf der Auswertesignalleitung 17 über den MOSFET 19 die Versorgungsspannung des Sendemoduls 3 abgetrennt, d. h. das Sendemodul 3 wird nicht mehr mit Strom versorgt und kann kein optisches Sendesignal über die optische Sendediode 5 mehr abgeben.

Sobald das Empfangsmodul 9 mit der optischen Empfangsdiode 11 wieder ein optisches Eingangssignal erhält, und damit das LOS Signal auf 0, bzw. das SD Signal auf 1 wechselt, wird über die Auswertesignalleitung 17 ein Signal ausgegeben, welches das als MOSFET ausgebildete Schaltelement 19 innerhalb des Sendemoduls 3 wieder einschaltet, so dass das Sendemodul 3 wieder mit Strom versorgt wird und entsprechend das anliegende Datensignal wieder als optisches Signal über die optische Sendediode 5 über die optische Datenübertragungsstrecke schicken kann. Der Vorteil der hier in der zweiten Ausführungsform vorgestellten technischen Umsetzung der vorliegenden Erfindung ist, dass externe Baugruppen oder Bauelemente nicht modifiziert werden müssen, um von der Energiesparfunktionalität des erfindungsgemäßen Transceivers zu profitieren. Auf diese Weise spart ein SFP Transceiver, der beispielsweise in einem Switch mit entsprechenden SFP Ports steckt, automatisch Strom, wenn der zugehörige Netzknoten bzw. Client kein Signal mehr über die optische Übertragungsstrecke an die Empfangsdiode 11 des Empfangsmoduls 9 des erfindungsgemäßen Transceivers 1 sendet. Der Switch muss folglich nicht modifiziert werden, und damit können ältere Switch-Modelle mit erfindungsgemäßen Transceivern ausgerüstet werden, um Strom zu sparen.

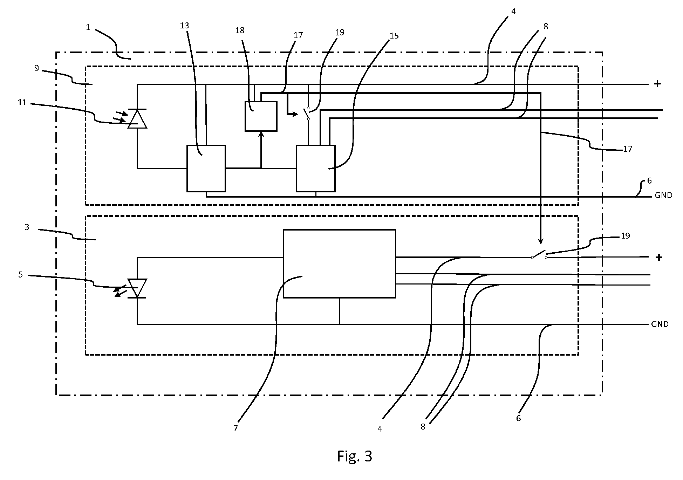

Fig. 3 zeigt eine schematische Darstellung einer weiteren, dritten Ausführungsform des erfindungsgemäßen Transceivers 1. Wie auch bei der zweiten Ausführungsform wird auf eine Wiederholung der Beschreibung von identischen Bauelementen und Bestandteilen des Transceivers 1 verzichtet. Im Folgenden werden die Unterschiede der dritten Ausführungsform bezogen auf die zweite Ausführungsform, die in Fig. 2 dargestellt ist, näher erläutert. Beim Empfangsmodul 9 der dritten Ausführungsform ist zwischen Vorverstärker 13 und Nachverstärker 15 ein Spitzenwertgleichrichter bzw. Spitzendetektor 18 geschaltet, der ebenfalls von der Versorgungsleitung 4 mit Gleichspannung versorg wird und das Auswertesignal über eine Auswertesignalleitung 17 ausgibt. Wie bei der in Fig. 2 dargestellten Ausführungsform ist die Auswertesignalleitung intern, d. h. direkt vom Empfangsmodul 9 zum Sendemodul 3 zu einem Schaltelement 19 geführt, das vorzugsweise als MOSFET ausgebildet ist. Im Unterschied zu der in Fig. 2 dargestellten Ausführungsform ist die Auswertesignalleitung 17 jedoch nicht aus dem Nachverstärker 15 heraus geführt. Das Ausgangssignal des Spitzenwertgleichrichters 18, das gleich dem Auswertesignal ist, wird ebenfalls über eine weitere Auswertesignalleitung 17 zu einem Schaltelement 19 geführt, das vorzugsweise als MOSFET ausgebildet ist und die Spannungs- bzw. Stromversorgung des Nachverstärkers 15 ein- und ausschaltet, je nachdem ob das optische Eingangssignal für die optische Empfangsdiode 11 vorliegt oder nicht.

Das Ausschalten des Nachverstärkers 15 erfolgt damit über Schaltelement 19, das die Verbindung zwischen Nachverstärker 15 und Versorgungsspannungsleitung 4 unterbrechen kann. Die Stromersparnis, die sich aus der Abschaltung des Nachverstärkers 15 bei fehlendem Eingangssignal für die Empfangsdiode 11 ergibt, ist größer als der Stromverbrauch des Spitzenwertgleichrichters 18, der als zusätzliches Bauelement bezogen auf die Ausführungsform aus Fig. 2 hinzugefügt ist. Mit dieser Schaltungslogik lassen sich also Einsparungen nicht nur durch das vollständige Abschalten des Sendemoduls 3, sondern auch durch das Abschalten von internen Bauelementen des Empfangsmoduls 9 erzielen.

Es ist auch denkbar, die erste Ausführungsform mit der dritten Ausführungsform zu kombinieren, so dass die Auswertesignalleitung 17 nicht innerhalb des Transceivers 1 direkt auf das Schaltelement 19 im Sendemodul 3 geführt ist, sondern auf ein Schaltelement, das außerhalb des Sendemoduls 3 liegt. An der tatsächlichen Energieeinsparung durch das Abschalten des Sendemoduls 3 auf Basis des Auswertesignals ändert sich dadurch nichts.

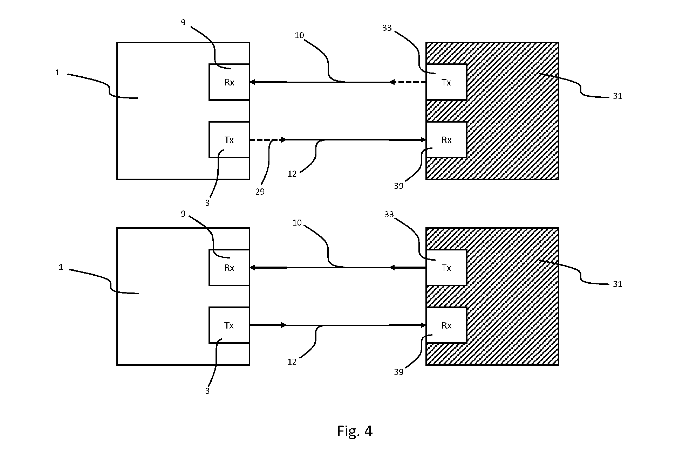

Fig. 4 zeigt eine schematische Darstellung von zwei erfindungsgemäßen Transceivern 1 mit jeweils einem nicht erfindungsgemäßen Transceiver 31, die über entsprechende optische Datenübertragungsstrecken 10, 12 miteinander verbunden sind. Die in Fig. 4 links dargestellten erfindungsgemäßen Transceiver 1 weisen Sendemodule 3, die mit einem "Tx" gekennzeichnet sind, und Empfangsmodule 9 auf, die mit einem "Rx" gekennzeichnet sind. Die in Fig. 4 rechts dargestellten Transceiver 31 sind nicht erfindungsgemäß, schraffiert gekennzeichnet und weisen Sendemodule 33, die mit einem "Tx" gekennzeichnet sind, und Empfangsmodule 39 auf, die mit einem "Rx" gekennzeichnet sind. Der Einfachheit halber wird auf die weiteren Bauelemente in der Darstellung der Fig. 4 verzichtet.

Im oberen Teil der Fig. 4 ist ein erfindungsgemäßer Transceiver 1 mit einem nicht erfindungsgemäßen Transceiver 31 verbunden, wobei die optische Datenübertragungsstrecke 10 von dem rechts befindlichen Sendemodul 33 zu dem links befindlichen Empfangsmodul 9 verläuft und direkt darunter vom Sendemodul 3 über die optische Datenübertragungsstrecke 12 zum Empfangsmodul 39 des rechts befindlichen Transceivers 31. Der gestrichelte Pfeil aus dem rechts dargestellten Sendemodul 33 soll dafür stehen, dass das Sendemodul eingeschaltet ist, d. h. das Sendemodul 33 des nicht erfindungsgemäßen Transceivers 31 auf der rechten Seite überträgt ein optisches Datensignal über die optische Datenübertragungsstrecke 10 zum Empfangsmodul 9 des erfindungsgemäßen Transceivers 1 auf der linken Seite. Gleichzeitig soll der gestrichelte Pfeil im Sendemodul 3 des links dargestellten, erfindungsgemäßen Transceivers 1 bedeuten, dass das entsprechende Sendemodul 3 ebenfalls eingeschaltet ist, um ein optisches Signal über die optische Datenübertragungsstrecke 12 zum Empfangsmodul 39 des Transceivers 31 zu senden.

Für die weitere Erläuterung der Darstellung in Fig. 4 wird nun angenommen, das die nicht erfindungsgemäßen Transceiver 31 auf der rechten Seite der Darstellung in Fig. 4 zu einem Netzknoten gehören, der beispielsweise einen Medienkonverter darstellt, der an einem PC angeschlossen ist, wohingegen die beiden erfindungsgemäßen Transceiver 1 auf der linken Seite zu einem Switch gehören, der als Zentralknoten im Heimnetzwerk den PC über das Ethernet-Protokoll mit dem Internet verbindet. Schaltet man nun den PC bzw. Netzknoten auf der rechten Seite aus, so sendet der Transceiver 31 auf der rechten Seite über sein Sendemodul 33 kein optisches Datensignal mehr, was in der unteren Hälfte von Fig. 4 durch den nicht mehr gestrichelten, sondern durchgezogenen Pfeil am Sendemodul 33 dargestellt ist. Der zugehörige Transceiver 1 auf der in Fig. 4 linken Seite, der sich im Switch befindet, empfängt damit kein Signal mehr in seinem Empfangsmodul 9. Durch die Funktionalität des erfindungsgemäßen Transceivers 1, die unter Bezugnahme auf die Fig. 1 bis 3 ausführlich beschrieben wurde, schaltet das Nichtvorhandensein eines Datensignals auf der oberen optischen Datenübertragungsstrecke 10 das Sendemodul 3 im Transceiver 1 vollständig aus. Von den Sende- bzw. Empfangsmodulen im unteren Abschnitt der Fig. 4 ist folglich nur noch das Empfangsmodul 9 im links dargestellten Transceiver 1 mit Strom versorgt. Gegenüber dem bisherigen, im Stand der Technik bekannten Transceiver ergibt sich damit eine Stromersparnis, denn dort war bisher auch immer das Sendemodul 3 des links unten befindlichen Transceivers 1 eingeschaltet, unabhängig davon, ob der mit dem Switch verbundene Netzknoten eingeschaltet oder ausgeschaltet war.

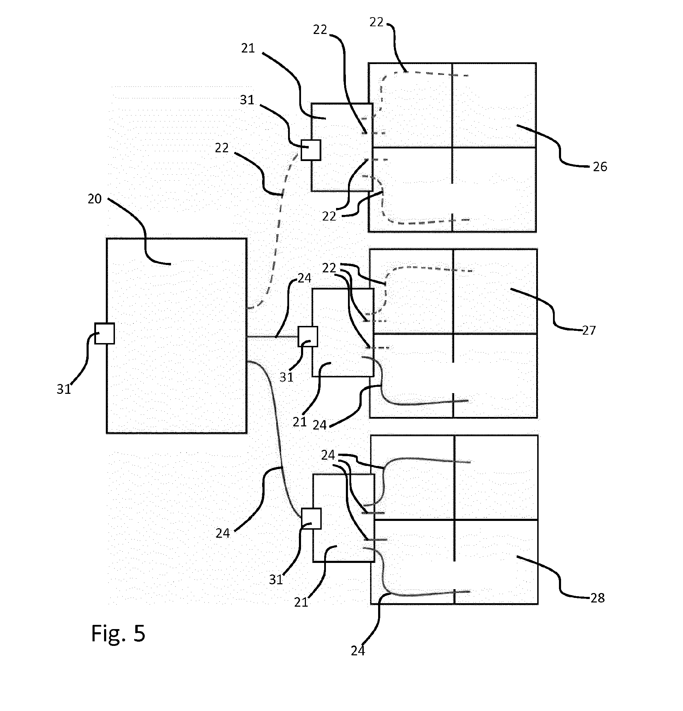

Fig. 5 zeigt ein schematisches Schaubild eines erweiterten Heimnetzwerks, das von der vorliegenden Erfindung Gebrauch macht. Auf der rechten Seite erkennt man drei Wohnungen 26, 27, 28, die jeweils als Rechtecke mit vier Zimmern dargestellt sind. In jedem dieser Zimmer ist ein (nicht dargestellter) Netzknoten angeordnet, der z. B. als PC ausgestaltet sein kann und über eine optische Datenübertragungsstrecke mit einem Zentralknoten 21 verbunden ist. Die optischen Datenübertragungsstrecken sind als inaktive Links 22 bzw. aktive Links 24 dargestellt. Die optischen Datenübertragungsstrecken bzw. Links sind zentralknotenseitig, d.h. am Zentralknoten 21 mit einem erfindungsgemäßen Transceiver abgeschlossen, die jeweils in den Zentralknoten 21 eingesteckt sind. Die drei Zentralknoten 21, mit denen die Netzknoten aus den drei Wohnungen 26, 27, 28 verbunden sind, sind Zentralknoten der Netzebene 5.

Die Ports bzw. Anschlüsse dieser Zentralknoten 21 in Richtung der Wohnungen 26, 27, 28 bezeichnet man auch als Downlink Ports, wohingegen der Anschluss bzw. Port in Richtung des Zentralknotens 20 der höheren Netzebene (Netzebene 4) als Uplink Port bezeichnet wird. Die Uplink Ports der Zentralknoten 21 der Netzebene 5 sind mit nicht erfindungsgemäßen Transceivern 31 abgeschlossen und mit den Downlink Ports des Zentralknotens 20 der Netzebene 4 über optische Datenübertragungsstrecken verbunden, die auch hier wiederum als inaktive Links 22 bzw. aktive Links 24 dargestellt sind. Die Downlink Ports des Zentralknotens 20 der Netzebene 4 sind mit erfindungsgemäßen Transceivern ausgestattet. An dieser Stelle ist anzumerken, dass die optischen Datenübertragungsstrecken jeweils auf einer Seite mit einem erfindungsgemäßen Transceiver und auf der anderen Seite (beispielsweise) mit einem nicht erfindungsgemäßen Transceiver abgeschlossen sind. Bei Zusammenschaltung von zwei erfindungsgemäßen Transceivern auf einer Datenübertragungsstrecke kann es zu unerwünschten Funktionszuständen kommen.

In Wohnung 28 sind sämtliche Links in zwischen den Zimmern befindlichen Netzknoten und dem Zentralknoten 21 als aktive Links 24 dargestellt, d. h. alle Endgeräte an den Netzknoten sind eingeschaltet und in Betrieb. Damit sind auch die erfindungsgemäßen Transceiver in den Downlink Ports des Zentralknotens 21 aktiv und der Zentralknoten 21 übermittelt Daten von und zu den Netzknoten in den Zimmern der Wohnung 28. Gleichzeitig ist auch der nicht erfindungsgemäße Transceiver 31 im Uplink Port des Zentralknotens 21 aktiv und damit ist auch die Verbindung zwischen dem Zentralknoten 21 der Wohnung 28 und dem Zentralknoten 20 der höheren Netzebene 4 als aktiver Link 24 dargestellt.

In der Wohnung 27 sind drei der vier Verbindungen zu Netzknoten in den Zimmern als inaktive Links 22 dargestellt. Dies bedeutet, dass die zugehörigen Netzknoten in den Zimmern ausgeschaltet sind und damit auch kein Datenverkehr zwischen dem Zentralknoten 21 der Netzebene 5 und den drei inaktiven Netzknoten der Wohnung 27 stattfindet. Ein Netzknoten ist jedoch noch aktiv (der in der unteren rechten Ecke), und deshalb ist dieser Link als aktiver Link 24 dargestellt. Um die Daten von dem letzten verbleibenden Netzknoten in Richtung der höheren Ebene zu transportieren, muss auch der Transceiver 31 im Uplink Port des Zentralknotens 21 der Netzebene 5 aktiv sein, und deshalb ist die Verbindung zwischen dem Uplink Port des Zentralknotens 21 der Netzebene 5 und dem mittleren Downlink Port des Zentralknotens 20 der Netzebene 4 als aktiver Link 24 dargestellt.

Bei der Wohnung 26 sind sämtliche Links zwischen dem Zentralknoten 21 der Netzebene 5 und den in den Zimmern befindlichen Netzknoten als inaktive Links 24 dargestellt, d. h. die Netzknoten bzw. PCs sind jeweils ausgeschaltet, und es findet kein Datenverkehr von den Netzknoten bzw. PCs in den Zimmern der Wohnung 26 hin zum Zentralknoten 21 der Netzebene 5 statt. Folglich ist es auch nicht notwendig, Daten zwischen dem Zentralknoten 21 der Netzebene 5 und dem Zentralknoten 20 der Netzebene 4 zu übertragen, denn keiner der Netzknoten in der Wohnung 26 kann Daten senden bzw. empfangen, da alle ausgeschaltet sind. Insofern braucht nun auch der Uplink Port des Zentralknotens 21 der Netzebene 5 keine Daten zu senden, weshalb der Transceiver des Uplink Ports ausgeschaltet werden kann, um Strom zu sparen. Dies erfolgt durch die entsprechende Schaltungslogik im Zentralknoten 21.

Schaltet sich nun ein Netzknoten in der Wohnung 26 an, so empfängt der Transceiver im zugehörigen Downlink Port in seinem Empfangsmodul ein SD (Signal Detect) Datensignal und schaltet daraufhin das zugehörige Sendemodul ein. Gleichzeitig wird auch im Zentralknoten 21 der Netzebene 5 der Transceiver 31 im Uplink Port hin zur Netzebene 4 aktiv geschaltet, um Daten zu übertragen. Als unmittelbare Folge dessen wird auch das Sendemodul im zugehörigen Downlink Port des Zentralknotens 20 der Netzebene 4 aktiviert, damit Daten in beiden Richtungen vom Zentralknoten der Netzebene 4 in die Netzknoten bzw. Clients in der Wohnung 26 übertragen werden können, sofern diese Netzknoten eingeschaltet sind.

Dadurch ergibt sich eine automatische Abschaltung der Transceiver 31 im Uplink Port der Zentralknoten 20 bzw. 22, sobald im Zentralknoten 20 bzw. 22 detektiert wird, dass in den Downlink Ports sämtliche Sendemodule der erfindungsgemäßen Transceiver abgeschaltet sind. Diese Abschalten erfolgt automatisch durch die erfindungsgemäße Verschaltung bzw. Signalauswertung in den Transceivern der Downlink Ports des entsprechenden Zentralknotens. Daraus können sich erhebliche Energieeinsparungen ergeben, beispielsweise bei einem Zentralknoten 20 der Netzebene 4, der als Hausverteiler ausgebildet ist und die Verbindung zu einem Switch in einer Wohnung komplett ausschalten kann, wenn in der entsprechenden Wohnung sämtliche verbundenen Geräte ausgeschaltet sind, beispielsweise wenn der betreffende Bewohner verreist ist. Nicht nur können dadurch erhebliche Einsparungen bei den Kosten erzielt werden, es ergeben sich dadurch auch größere Betriebsdauern der entsprechenden Sendemodule, denn die Lebensdauern von derartigen Modulen ist begrenzt und kann durch die erfindungsgemäße Beschaltung erheblich verlängert werden.

Bei einem wie oben skizzierten Heimnetzwerk mit einer baumartigen Struktur, das über optische Datenübertragungsstrecken mit seinen Netzknoten verbunden ist, wird daher ein Link auf niedrigerer Netzwerkebene durch Ausschalten des Sendemoduls in einem erfindungsgemäßen Transceiver deaktiviert, und damit schaltet sich gegebenenfalls, nämlich wenn alle Sendemodule der Transceiver in den Downlink Ports abgeschaltet sind, auch automatisch der nicht erfindungsgemäße Transceiver im Uplink Port des Zentralknotens aus. Sobald sich das Sendemodul auf niedrigerer Netzwerkebene wieder einschaltet, schaltet sich auch automatisch der Transceiver des zugehörigen Uplink Ports in dem Zentralknoten der höheren Ebene wieder ein. Sobald alle optischen Datenübertragungsverbindungen auf einer Netzwerkebene ausgeschaltet sind, wie in Fig. 5 die Links zwischen den drei Zentralknoten 21 der Netzebene 5 und dem Zentralknoten 20 der Netzebene 4, schaltet sich auch automatisch der Transceiver des Uplink Ports 31 des Zentralknotens 20 der Netzebene 4 aus.

Mit dem Gegenstand der vorliegenden Erfindung wird ein Transceiver zur Verbindung eines Zentralknotens in einem Ethernet-Netzwerk mit einem Netzknoten über eine optische Datenübertragungsstrecke und ein entsprechender Zentralknoten bereitgestellt, der Stromkosten einspart, einfach aufgebaut ist, keine hohen Investitionskosten verursacht, die Lebensdauer der vorhanden Bauelemente erhöht und die Handhabung des Ethernet-Netzwerks verbessert.

## Patentansprüche

1. Transceiver (1) zur Verbindung eines Zentralknotens (20, 21) in einem Ethernet-Netzwerk mit einem Netzknoten über eine optische Datenübertragungsstrecke (10, 12), mit
einem Sendemodul (3) zum Senden von optischen Signalen an einen Netzknoten, wobei das Sendemodul (3) eine optische Sendediode (5) und eine Treiberschaltung (7) aufweist,
einem Empfangsmodul (9) zum Empfangen von optischen Signalen von einem Netzknoten, wobei das Empfangsmodul (9) eine optische Empfangsdiode (11), einen Vorverstärker (13) und einen Nachverstärker (15) aufweist,
**dadurch gekennzeichnet, dass**
das Empfangsmodul (9) ein Auswertesignal ausgibt, das dazu verwendet wird, das Sendemodul (3) ein- oder auszuschalten.

2. Transceiver (1) nach Anspruch 1, **dadurch gekennzeichnet, dass** das Auswertesignal ein Loss-of-Signal (LOS) Digitalsignal oder ein Signal-Detect (SD) Digitalsignal ist.

3. Transceiver (1) nach einem der vorhergehenden Ansprüche, **dadurch gekennzeichnet, dass** er ein Schaltelement (19) aufweist, das vom Auswertesignal angesteuert wird, im Sendemodul (3) angeordnet und als MOSFET ausgebildet ist.

4. Transceiver (1) nach einem der vorhergehenden Ansprüche, **dadurch gekennzeichnet, dass** das Auswertesignal innerhalb des Transceivers (1) vom Empfangsmodul (9) unmittelbar zum Sendemodul (3) übertragen wird.

5. Transceiver (1) nach einem der vorhergehenden Ansprüche, **dadurch gekennzeichnet, dass** das Empfangsmodul (9) zwischen Vorverstärker (13) und Nachverstärker (15) einen Spitzenwertgleichrichter (18) aufweist, dessen Ausgangssignal als Auswertesignal ausgebildet ist, um unmittelbar das Sendemodul (3) und den Nachverstärker (15) des Empfangsmoduls (3) auszuschalten.

6. Transceiver (1) nach Anspruch 5, **dadurch gekennzeichnet, dass** der Nachverstärker (15) mit einem Schaltelement (19) im Empfangsmodul (9) ein- und ausschaltbar ist, das mit dem Auswertesignal angesteuert wird.

7. Transceiver (1) nach Anspruch 6, **dadurch gekennzeichnet, dass** das Schaltelement (19) im Empfangsmodul (9) als MOSFET ausgebildet ist.

8. Zentralknoten (20, 21) für ein Ethernet-Netzwerk zur Datenübertragung zwischen dem Zentralknoten (20, 21) mit mindestens einem Netzknoten über eine optische Datenübertragungsstrecke (10, 12),
wobei der Zentralknoten (20, 21) pro Netzknoten einen Downlink Port umfasst,
wobei jeder Downlink Port einen Transceiver aufweist, der den Zentralknoten (20, 21) über die optische Datenübertragungsstrecke (10, 12) mit dem zugehörigen Netzknoten verbindet und ein Empfangsmodul sowie ein Sendemodul umfasst,
**dadurch gekennzeichnet, dass**
jeder Transceiver geeignet ist, den Betriebszustand des zugehörigen Netzknotens zu detektieren und als Auswertesignal an den Zentralknoten zu übermitteln, so dass
bei ausgeschaltetem Zustand des zugehörigen Netzknotens der Zentralknoten (20, 21) das Sendemodul des Transceivers automatisch ausschaltet, und
bei eingeschaltetem Zustand des zugehörigen Netzknotens der Zentralknoten (20, 21) das Sendemodul des Transceivers automatisch einschaltet.

9. Zentralknoten (20, 21) nach Anspruch 8, **dadurch gekennzeichnet, dass** der Betriebszustand eines Netzknotens im Empfangsmodul des zugehörigen Transceivers durch Auswertung des Loss-of-Signal (LOS) Digitalsignals oder durch Auswertung des Signal-Detect (SD) Digitalsignals als Auswertesignal bestimmt ist.

10. Zentralknoten (20, 21) nach einem der Ansprüche 8 bis 9, **dadurch gekennzeichnet, dass** er pro Downlink Port ein Schaltelement aufweist, dem das Auswertesignal des zugehörigen Transceivers zugeführt wird, um das Sendemodul des zugehörigen Transceivers aus- bzw. einzuschalten.

11. Zentralknoten (20, 21) nach Anspruch 10, **dadurch gekennzeichnet, dass** er ein Verarbeitungsmodul aufweist, das das Auswertesignal jedes Transceivers empfängt und entsprechend jedem Schaltelement ein Schaltsignal übermittelt.

12. Zentralknoten (20, 21) nach einem der Ansprüche 8 bis 11, **dadurch gekennzeichnet, dass** er einen Uplink Port aufweist, der über eine optische Datenübertragungsstrecke (10, 12) mit einem Netzknoten einer höheren Ebene verbindbar ist, wobei der Uplink Port einen Transceiver aufweist.

13. Zentralknoten (20, 21) nach Anspruch 12, **dadurch gekennzeichnet, dass** der Transceiver des Uplink Ports automatisch abgeschaltet wird, sobald die Sendemodule (3) der Transceiver (1) aller Downlink Ports des Zentralknotens (20, 21) im ausgeschalteten Betriebszustand sind, und dass der Transceiver des Uplink Ports automatisch eingeschaltet wird, sobald mindestens ein Sendemodul (3) der Transceiver (1) aller Downlink Ports des Zentralknotens (20, 21) im eingeschalteten Betriebszustand ist.
